# EUROPÄISCHE PATENTSCHRIFT

(11) **EP 0 877 878 B1**
(45) Veröffentlichungstag und Bekanntmachung des Hinweises auf die Patenterteilung: **28.07.1999**
(21) Anmeldenummer: 97903222.4
(22) Anmeldetag: 06.02.1997
(51) Int. Cl.: F16H 61/00

(54) **AUTOMATISCHES ELEKTROHYDRAULISCH GESTEUERTES GETRIEBE**
AUTOMATIC ELECTROHYDRAULICALLY CONTROLLED TRANSMISSION
TRANSMISSION AUTOMATIQUE A COMMANDE ELECTRO-HYDRAULIQUE

(30) Priorität: 10.02.1996 DE 19604957
(43) Veröffentlichungstag der Anmeldung: 18.11.1998
(73) Patentinhaber: AUDI AG, 85045 Ingolstadt (DE)
(72) Erfinder: BARNREITER, Karl, D-85122 Hitzhofen (DE); FLEISCHMANN, Hans-Peter, D-85134 Stammham (DE); MÄRKL, Johann, D-85128 Nassenfels (DE); SUCHANDT, Thomas, D-85051 Ingolstadt (DE)
(86) Internationale Anmeldenummer: EP9700522
(87) Internationale Veröffentlichungsnummer: WO9729306

(56) Entgegenhaltungen:
- WO-A-94/05931
- DE-A- 19 519 227
- DE-C- 4 334 595
- GB-A- 2 179 712
- US-A- 4 083 266
- DATABASE WPI Week 9418 Derwent Publications Ltd., London, GB; AN 94058378 XP002031102 & DE 43 02 007 A (MTU)

## Beschreibung

Die Erfindung betrifft ein automatisches elektrohydraulisch gesteuertes Getriebe, insbesondere in Kraftfahrzeugen, gemäß dem Oberbegriff des Patentanspruches 1.

Ein derartiges Getriebe zeigt die DE-A 43 34 595, bei dem die elektronische Steuerungseinrichtung und die hydraulische Steuerungseinrichtung unmittelbar einander benachbart angeordnet und an dem Getriebegehäuse an einem oben liegenden Getriebeflansch angebaut sind. Da bei derartigen elektrohydraulisch gesteuerten Getrieben mehrere Druckölversorgungen unmittelbar in der An- und Abtriebswelle verlaufen, ist deren Anschluß an die hydraulische Steuerungseinrichtung relativ aufwendig.

Aufgabe der Erfindung ist es, ausgehend von dem gattungsgemäßen Getriebe eine verbesserte Anordnung der hydraulischen und elektronischen Steuerungseinrichtung zu schaffen, die eine einfache und günstige Druckölversorgung und Montage bei verringertem Teileaufwand ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird somit vorgeschlagen, daß der Getriebeflansch der dem Getriebeeingang gegenüberliegende stirnseitige Getriebeflansch ist, auf den die hydraulische Steuerungseinrichtung aufsteckbar ist, wobei in dessen Flanschbereich mündende Hydraulikanschlüsse durch dichtende Verbindungen unmittelbar an die hydraulische Steuerungseinrichtung angeschlossen sind. Die Hydraulikanschlüsse können sowohl unmittelbar in der An- und Abtriebswelle als auch durch in den Flanschbereich geführte Leitungsanschlüsse gebildet sein.

Ferner kann die Hydraulikpumpe unmittelbar an die hydraulische Steuerungseinrichtung angebaut sein, wodurch sich eine verbesserte Vormontage der gesamten elektrohydraulischen Steuerung ergibt.

Dabei ist es vorteilhaft, wenn die von der hydraulischen Steuerung in das Getriebe führenden Hydraulikanschlüsse in den stirnseitigen Flanschbereich verlegt und durch dichtende Verbindungen angeschlossen sind.

Durch die strinseitige Anordnung können ferner an der hydraulischen Steuerung befestigte Rohrstutzen unmittelbar in in der An- oder Abtriebswelle vorgesehene Kanäle einragen; d. h., daß über die Wellen verteiltes Hydraulikfluid unmittelbar von der hydraulischen Steuerung ohne jegliche weitere Leitungs- oder Kanalführung zugeführt wird.

Ferner können im Getriebegehäuse angeordnete Versorgungsleitungen über Dichthülsen an entsprechende Anschlußflächen der hydraulischen Steuerung angeschlossen sein, wobei die Dichthülsen aufgrund ihrer Konstruktion gemäß den Merkmalen der Patentansprüche 5 und 6 Längenausdehnungen und Längentoleranzen der Versorgungsleitungen ohne der Gefahr von Undichtigkeiten ausgleichen.

Ein Ausführungsbeispiel der Erfindung ist im folgenden mit weiteren Einzelheiten näher beschrieben. Die schematische Zeichnung zeigt in
- Fig. 1: einen teilweisen Längsschnitt entlang der Getriebe-Abtriebswelle mit Abschlußdeckel und hydraulischer und elektronischer Steuerung eines automatischen CVT-Getriebes eines Kraftfahrzeuges;
- Fig. 2: einen weiteren teilweisen Längsschnitt ähnlich Fig. 1, jedoch entlang mehrerer hydraulischer Leitungsverbindungen zwischen der hydraulischen Steuerung und im Getriebe befindlichen, hydraulisch gesteuerten Kupplungen des Getriebes;
- Fig. 3: einen weiteren teilweisen Längsschnitt mit Anordnung des Ölfilters der hydraulischen Steuerung; und
- Fig. 4: eine Draufsicht auf den die hydraulische und elektrische Steuerung tragenden stirnseitigen Getriebeflansch.

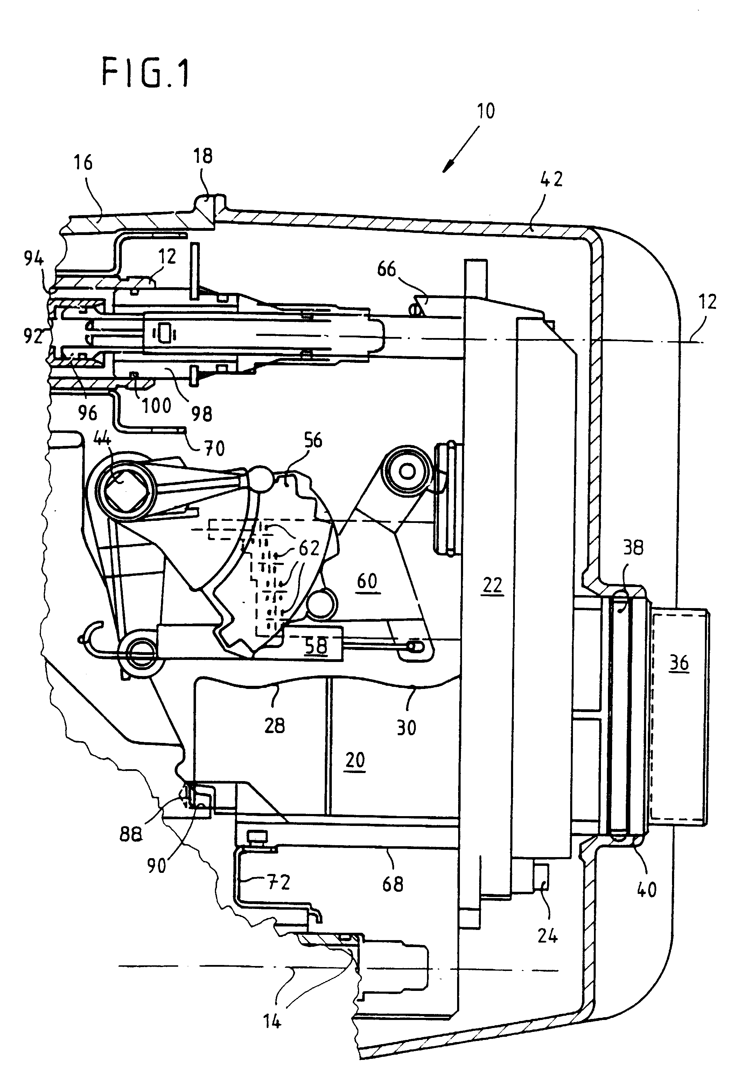

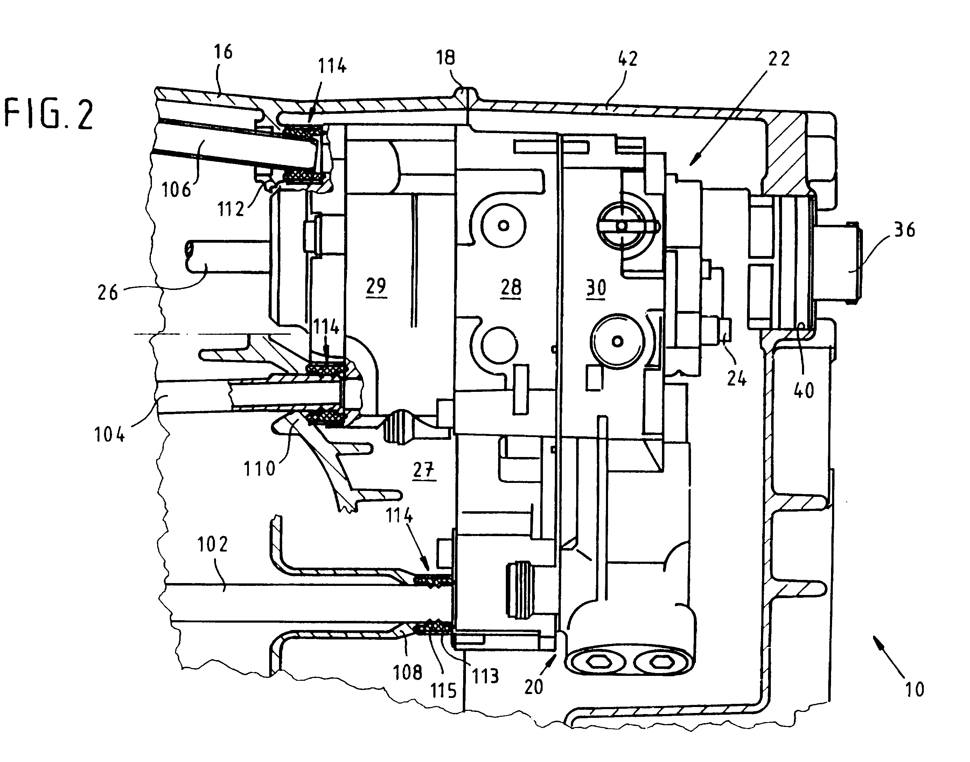

Der in den Fig. 1 - 4 dargestellte Abschnitt 10 ist Teil eines elektrohydraulisch gesteuerten CVT-Getriebes mit einer Antriebswelle 12 und einer Abtriebswelle 14, auf denen in ihren wirksamen Durchmessern verstellbare An- und Abtriebs-Kegelscheiben und ein Umschlingungsmittel, z. B. ein Gliederband, zur stufenlosen Übersetzungsänderung angeordnet sind und das Getriebemittel zur Drehrichtungsumkehr (Rückwärtsgang) und hydraulisch beaufschlagbare Kupplungen zum Anfahren und zur Fahrrichtungsumschaltung enthält. Diese nicht dargestellten Getriebkomponenten sind herkömmlicher, bekannter Bauart.

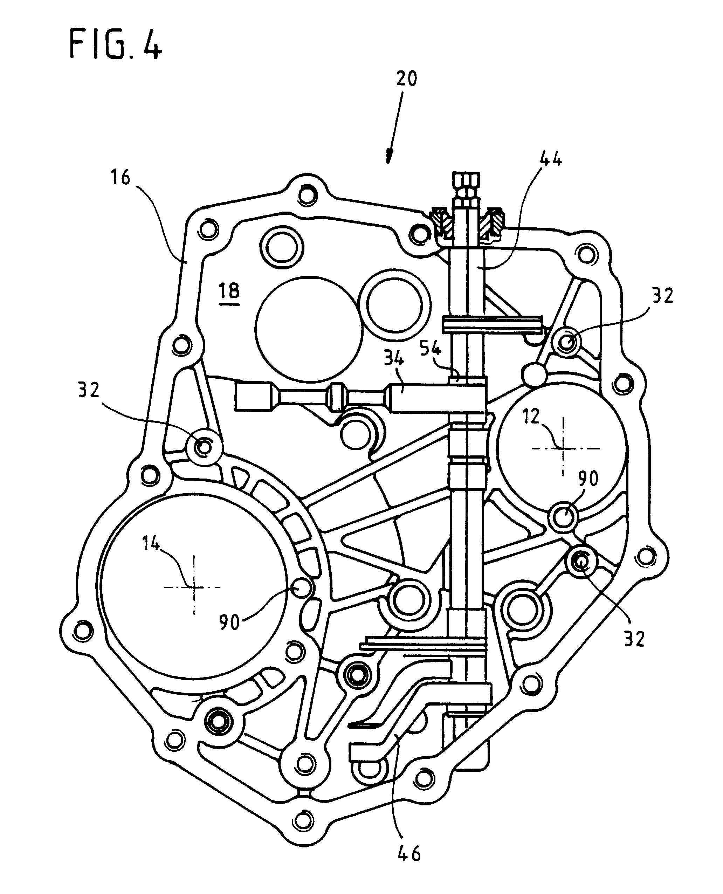

Das Gehäuse 16 des Getriebes endet an dem dem Getriebeein- und -ausgang gegenüberliegendem Ende in einem stirnseitigen Getriebeflansch 18, auf den einander unmittelbar benachbart eine hydraulische Steuerung 20 und eine elektronische Steuerung 22 aufgesteckt und mittels Schrauben (nicht dargestellt) in einer 3-Punkt Befestigung (siehe Fig.4 - Gewindebohrungen 32) verspannungsfrei befestigt sind. Dabei liegt in einem vertieften Bereich 27 des Getriebeflansches 18 die Hydraulikpumpe 29, die unmittelbar an die hydraulische Steuerung 20 anschließt und ausschließlich an dieser befestigt ist. Der Antrieb der Hydraulikpumpe 29 erfolgt über eine Antriebswelle 26, die mittels einer Steckverzahnung drehfest in das nicht dargestellte Pumpenzahnrad der Hydraulikpumpe 29 eingreift.

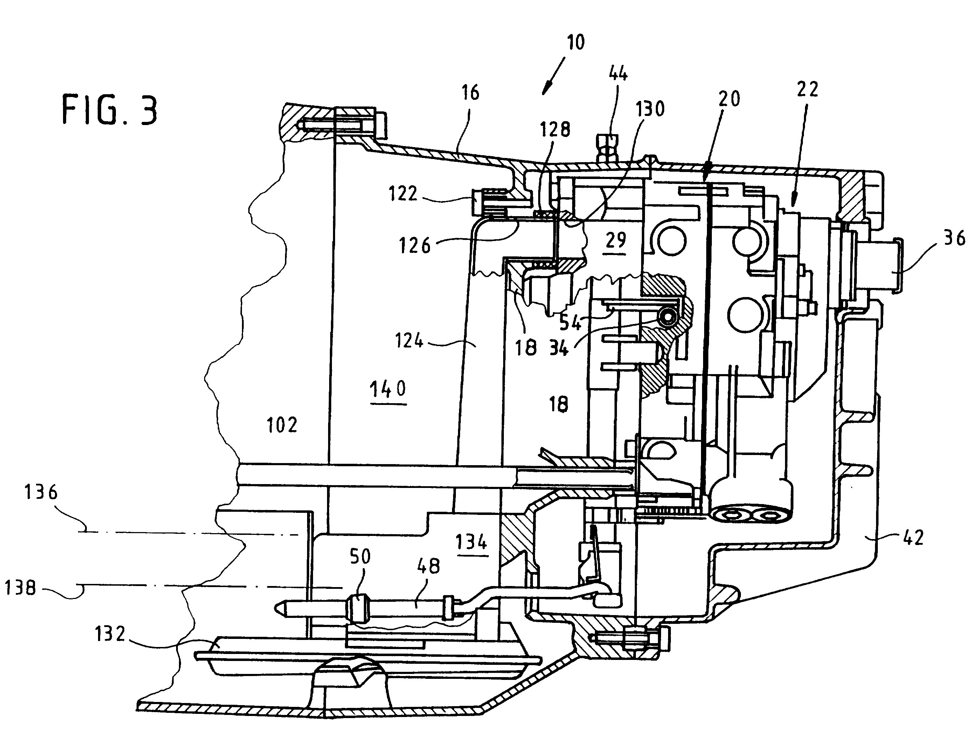

Die hydraulische Steuerung 20 besteht im wesentlichen aus zwei Kanalplatten 28,30, in denen in bekannter Weise Steuerkanäle, Kolbenschieber 34 (vgl. Fig. 3) und Magnetventile (nicht dargestellt) zum Ansteuern der Kegelscheiben und Kupplungen des Getriebes angeordnet sind und in die unmittelbar das unter Druck stehende Hydraulikfluid aus der Pumpe 29 eingespeist wird.

Die elektronische Steuerung 22, die unmittelbar auf die hydraulische Steuerung 20 aufgesteckt ist, enthält in bekannter Weise eine CPU mit den logischen Verknüpfungsschaltungen sowie Kennlinienspeicher der Schaltprogramme und entsprechende Ausgangsverstärker zur Ansteuerung der Magnetventile zur hydraulischen Steuerung des Getriebes, wobei die fahrzeugspezifischen Parameter wie Motormanagement, Leistungsanforderung (Gaspedalstellung), etc. vom Kraftfahrzeug über einen an der plattenförmigen elektronischen Steuerung 22 vorgesehenen Zentralanschluß 36 in Form einer Steckerbuchse mit entsprechenden Steckkontakten eingeleitet und Getriebesignale abgegeben werden (z. B. Geschwindigkeitssignal, Überwachungssignale, Diagnose, etc.).

Der Zentralanschluß 36 erstreckt sich dabei unter Zwischenschaltung einer Ringdichtung 38 durch einen Durchbruch 40 in einem die hydraulische und elektronische Steuerung 20,22 umschließenden Abschlußdeckel 42. Der Abschlußdeckel 42 ist wiederum mit dem Getriebeflansch 18 unter Zwischerschaltung einer Dichtung verschraubt.

In dem Getriebegehäuse 16 ist ferner eine über einen Gangwählhebel (nicht dargestellt) manuell betätigbare Schaltwelle 44 drehbar gelagert (vgl. z. B. Fig.3 und 4), die über einen abragenden Arm 46 und ein Gestänge 48 mit einer Konusbüchse 50 die Klinke einer Parksperre (nicht dargestellt) des Getriebes betätigt. Ein weiterer abragender Arm 54 der Schaltwelle 44 betätigt einen Schaltschieber 34 der hydraulischen Steuerung 20.

Schließlich trägt die Schaltwelle 44 einen aus Kunststoff bestehenden, angespritzten Stellungsgeber 56 (vgl. Fig. 1), der mit einer durch eine Feder 58 vorgespannten Rastklinke 60 zusammenwirkt und in den je Schaltstellung ein Magnetelement 62 eingebettet ist.

Die Magnetelemente 62 dienen zur berührungslosen Sensierung der Schaltstellungen der Schaltwelle 44 nach dem Halleffekt, wobei von der elektronischen Steuerung 22 ein entsprechend angeformter Hallsensor (nicht dargestellt) abragt.

Ferner erstrecken sich von der elektronischen Steuerung 22 an der hydraulischen Steuerung 20 vorbei in das Getriebegehäuse 16 einragende, armartige Drehzahlsensoren 66,68, die mit auf der An- und Abtriebswelle 12,14 befestigten Geberrädern 70,72 unmittelbar die Drehzahl dieser Wellen sensieren. Dies kann in bekannter Weise nach dem Induktions- oder Halleffekt-Verfahren erfolgen.

Zur genauen Fixierung der von der elektronischen Steuerung 22 abragenden Sensoren 66,68 relativ zu den Geberrädern 70,72 bzw. zu dem Stellungsgeber 56 sind an den Sensoren an deren freien Enden Stifte 88 angeformt, die in korrespondierende Bohrungen 90 im Getriebeflansch 18 einragen.

Der Anschluß der hydraulischen Steuerung 20 an das Getriebe wird einerseits zur Steuerung der Kegelscheiben bzw. des stufenlosen Übersetzungsverhältnisses über Kanäle bzw. Ringkanäle 92,94 (vgl. Fig. 1 anhand der Antriebswelle 12) in der An- bzw. Abtriebswelle 12,14 bewirkt, wobei von der hydraulischen Steuerung 22 abragende Rohrstutzen 96,98 unter Zwischenschaltung von dichtenden Kolbenringen 100 in diese Kanäle 92,94 eingesteckt sind; aufgrund der verwendeten Kolbenringe 100 ist eine Relativdrehung der zu dichtenden Bauteile gegeben.

Andererseits sind zur hydraulischen Versorgung der Kupplungen frei im Getriebegehäuse 16 verlaufende Versorgungsleitungen 102,104,106 vorgesehen, die in im Getriebegehäuse 16 vorgesehenen Aufnahmen 108,110,112 eingesteckt sind und diese in Richtung zur hydraulischen Steuerung 20 überragen, wobei jeweils eine auf die Versorgungsleitungen 102,104,106 aufgesteckte, ringförmige Dichthülse 114 mit einer äußeren Spannhülse 113 und einem elastischen Dichtring 115 mit radial und axial ausgerichteten Dichtlippen eine Toleranzen sicher ausgleichende Abdichtung zwischen den Anschlußflächen der hydraulischen Steuerung 20 und den gehäusefesten Aufnahmen 108,110,112, bzw. den Versorgungsleitungen 102,104,106 sicherstellt.

Wie aus der Zeichnung ohne weiteres ersichtlich ist, sind alle Dicht- und Steckverbindungen parallel zur An- und Abtriebswelle 12,14 ausgerichtet, so daß durch einfaches Aufstecken des ggf. bereits vormontierten Steuerungsblockes aus Hydraulikpumpe 29, hydraulischer Steuerung 20 und elektronischer Steuerung 22 und anschließendes Befestigen mittels Einschrauben der nicht dargestellten Schrauben in die Gewindebohrungen 32 alle hydraulischen und elektrischen Anschlüsse und Verbindungen innerhalb des Getriebes hergestellt sind. Nach Montage des Anschlußdeckels 42 ist dann nur noch der fahrzeugseitige Zentralstecker mit dem korrespondierenden Zentralanschluß 36 zu verbinden.

An der der hydraulischen Steuerung 20 abgewandten Seite des Getriebeflansches 18 ist über eine Schraube 122 ein Saugrohr 124 befestigt, das mit einem rechtwinkelig anschließendem Anschlußstutzen 126 durch den Getriebeflansch 18 hindurch mittels einem aufgesteckten Dichtring 128 dicht an die Anschlußöffnung 130 der Hydraulikpumpe 29 angeschlossen ist.

Das Saugrohr 124 trägt einen Ölfilter 132, der an der Unterseite des Getriebegehäuses 16 befestigt ist und der eine senkrecht und in Längsrichtung des Getriebes 10 verlaufende Trennwand 134 aufweist.

Die Trennwand 134 staut das Hydrauliköl im Getriebegehäuse 16 bzw. in dem die Kegelscheiben aufnehmendem Raum 140 des Getriebes 10 derart, daß bei der geodätisch höher liegenden Kegelscheibe ein Ölsumpf entsprechend der Höhe der Trennwand 134 (etwa Linie 136) und bei der geodätisch tiefer liegenden Kegelscheibe (vgl. Anordnung der Getriebewellen 12, 14) ein Ölsumpf etwa entsprechend der Positionierung des Ölfilters 132 bzw. der Linie 138 vorliegt.

Die Erfindung ist nicht auf das beschriebene Ausführungsbeispiel beschränkt. So kann beispielsweise anstelle eines CVT-Getriebes auch ein automatisches Stufengetriebe, z. B. ein Umlaufrädergetriebe, verwendet sein.

## Patentansprüche

1. Automatisches elektrohydraulisch gesteuertes Getriebe (10), insbesondere in Kraftfahrzeugen, mit
- einer Antriebswelle (12) und einer Abtriebswelle (14),
- Getriebemitteln zwischen den Wellen, die zur Übersetzungsänderungssteuerung hydraulisch betätigt werden,
- einer hydraulischen Steuerungseinrichtung (20) mit einer Hydraulikpumpe (29), elektrischen Magnetventilen, die das Hydraulikfluid zu den hydraulischen Betätigungsmitteln leiten,
- einer elektronischen Steuerungseinrichtung (22) zur Ansteuerung der Magnetventile, wobei die elektronische Steuerungseinrichtung nach Maßgabe von Eingabeparametern und Drehzahlsensierung der Wellen (12,14) die Magnetventile ansteuert, und
- einem Getriebegehäuse mit einem Getriebeflansch (18), an den die hydraulische und die elektronische Steuerungseinrichtung (20,22) unmittelbar einander benachbart angebaut sind,
dadurch gekennzeichnet daß
- der Getriebeflansch der dem Getriebeeingang gegenüberliegende stirnseitige Getriebeflansch ist, auf den die hydraulische Steuerungseinrichtung (20) aufsteckbar ist, wobei in dessen Flanschbereich mündende Hydraulikanschlüsse durch dichtende Verbindungen unmittelbar an die hydraulische Steuerungseinrichtung (20) angeschlossen sind.

2. Getriebe nach Anspruch 1, dadurch gekennzeichnet, daß die Hydraulikpumpe (29) unmittelbar an die hydraulische Steuerungseinrichtung (20) angebaut ist.

3. Getriebe nach Anspruch 1 oder 2, dadurch gekennzeichnet, daß die hydraulische Steuerungseinrichtung (20) über eine 3-Punkt-Befestigung (32) verspannungsfrei an dem Getriebeflansch (18) befestigt ist.

4. Getriebe nach den Ansprüchen 1 bis 3, dadurch gekennzeichnet, daß an der hydraulischen Steuerungseinrichtung (20) befestigte Rohrstutzen (96,98) unmittelbar in in der An- und Abtriebswelle (12,14) vorgesehene Kanäle (92,94) einragen.

5. Getriebe nach einem oder mehreren der vorhergehenden Ansprüche, dadurch gekennzeichnet, daß im Getriebegehäuse (16) angeordnete Versorgungsleitungen (102,104,106) in gehäusefesten Aufnahmen (108,110,112) abgestützt und mittels Dichthülsen (114) an die hydraulische Steuerungseinrichtung (20) angeschlossen sind.

6. Getriebe nach Anspruch 5, dadurch gekennzeichnet, daß die Versorgungsleitungen (102,106) die Aufnahmen (108,110,112) überragen, und daß die Dichthülsen (114) auf die Versorgungsleitungen aufgesteckt sind.

7. Getriebe nach den Ansprüchen 5 und 6, dadurch gekennzeichnet, daß die Dichthülsen (114) radial und axial ausgerichtete Dichtlippen aufweisen und die axiale Abdichtung zwischen der Anschlußfläche der hydraulischen Steuerungseinrichtung (20) und den gehäusefesten Aufnahmen (108,110,112) und die radiale Abdichtung zwischen einer Spannhülse (113) der Dichthülsen (114) und den Versorgungsleitungen (102,104,106) erfolgt.

8. Getriebe nach einem oder mehreren der vorhergehenden Ansprüche, dadurch gekennzeichnet, daß ein mit einem Ölfilter (132) verbundenes Saugrohr (124) an der der hydraulischen Steuerungseinrichtung (20) abgewandten Seite des Getriebeflansches (18) befestigt ist und mit einem 90° abgewinkeltem Anschlußstutzen (126) durch den Getriebeflansch (18) hindurch dicht mit der Hydraulikpumpe (29) verbunden ist.

9. Getriebe nach einem oder mehreren der vorhergehenden Ansprüche, dadurch gekennzeichnet, daß das Getriebe ein stufenlos übersetzendes Getriebe ist mit einer Antriebs- und einer Abtriebskegelscheibe und einem Umschlingungsmittel, wobei der etwa unterhalb der Kegelscheiben des Getriebes (10) angeordnete Ölfilter (132) eine längsverlaufende Trennwand (134) trägt, die im Querschnitt gesehen unterschiedlich hohe Ölstände im Getriebegehäuse (16) bewirkt.

## Claims

1. Automatic electro-hydraulically controlled transmission (10), more particularly one for motor vehicles, having
- an input shaft (12) and an output shaft (14),
- transmission means between the shafts, which are hydraulically operated for controlling changes in transmission ratios,
- a hydraulic control device (20) with a hydraulic pump (29), electric solenoid valves which convey the hydraulic fluid to the hydraulic operating means,
- an electronic control device (22) for energising the solenoid valves, the electronic control device energising the solenoid valves according to input parameters and sensing of the speed of the shafts (12, 14), and
- a transmission case with a transmission case flange (18), onto which the hydraulic and the electronic control devices (20, 22) are mounted immediately alongside one another,
characterised in that
- the transmission case flange is the end transmission case flange opposite the transmission input, onto which flange the hydraulic control device (20) is adapted to be pushed, with hydraulic connections which open out into the flange region thereof being linked directly to the hydraulic control device (20) by sealing connections.

2. Transmission according to claim 1, characterised in that the hydraulic pump (29) is mounted directly onto the hydraulic control device (20).

3. Transmission according to claim 1 or 2, characterised in that the hydraulic control device (20) is attached in a bracefree manner to the transmission case flange (18) via a three-point fixing (32).

4. Transmission according to claims 1 to 3, characterised in that tubular connectors (96, 98) attached to the hydraulic control device (20) jut directly into ducts (92, 94) provided in the input and output shafts (12, 14).

5. Transmission according to one or more of the preceding claims, characterised in that supply lines (102, 104, 106) disposed in the transmission case (16) are supported in locators (108, 110, 112) integral with the case and are linked to the hydraulic control device (20) by means of sealing sleeves (114).

6. Transmission according to claim 5, characterised in that the supply lines (102, 106) jut past the locators (108, 110, 112) and that the sealing sleeves (114) are pushed onto the supply lines.

7. Transmission according to claims 5 and 6, characterised in that the sealing sleeves (114) have radially and axially orientated sealing lips, and the axial sealing is effected between the connection surface of the hydraulic control device (20) and the locators (108, 110, 112) integral with the case, and the radial sealing is effected between a tensioning sleeve (113) of the sealing sleeves (114) and the supply lines (102, 104, 106).

8. Transmission according to one or more of the preceding claims, characterised in that an intake manifold (124) connected to an oil filter (132) is attached on the side of the transmission case flange (18) that is furthest from the hydraulic control device (20) and is imperviously connected to the hydraulic pump (29) with a 90° angled connector (126) right through the transmission case flange (18).

9. Transmission according to one or more of the preceding claims, characterised in that the transmission is a continuously variable transmission with a driving conical plate and a driven conical plate and a belt-drive means, the oil filter (132) which is disposed more or less beneath the conical plates of the transmission (10) carrying a longitudinally extending partition wall (134) which viewed in cross-section produces varying oil levels in the transmission case (16).

## Revendications

1. Transmission automatique à commande électrohydraulique (10), notamment dans des véhicules automobiles, comprenant :
- un arbre d'entraînement (12) et un arbre entraîné (14),
- des moyens de transmission situés entre les arbres et qui sont actionnés par voie hydraulique pour la commande du changement de rapport de transmission,
- un dispositif de commande hydraulique (20) comportant une pompe hydraulique (29), les soupapes électromagnétiques, qui envoient le fluide hydraulique aux moyens d'actionnement hydrauliques,
- un dispositif de commande électronique (22) pour la commande des soupapes magnétiques, le dispositif de commande électronique commandant les soupapes magnétiques en fonction de paramètres d'entrée et de la détection des vitesses de rotation des arbres (12, 14), et
- un carter de transmission comportant une bride de transmission (18), sur laquelle le dispositif de commande hydraulique et le dispositif de commande électronique (20, 22) sont montés directement au voisinage l'un de l'autre,
caractérisée en ce que
- la bride de la transmission est la bride frontale de la transmission située à l'opposé de l'entrée de la transmission et sur laquelle peut être emmanchée le dispositif de commande hydraulique (20), des raccords hydrauliques débouchant dans cette partie de bride étant raccordés directement, par l'intermédiaire de liaisons établissant une étanchéité, au dispositif de commande hydraulique (20).

2. Transmission selon la revendication 1, caractérisée en ce que la pompe hydraulique (29) est montée directement sur le dispositif de commande hydraulique (20).

3. Transmission selon la revendication 1 ou 2, caractérisée en ce que le dispositif de commande hydraulique (20) est fixé sans serrage à la bride (18) de la transmission par l'intermédiaire d'un système de fixation à 3 points (32).

4. Transmission selon les revendications 1 à 3, caractérisée en ce que des tubulures (96, 98), qui sont fixées au dispositif de commande hydraulique (20), pénètrent directement dans des canaux (92, 94) prévus dans l'arbre d'entraînement et dans l'arbre entraîné (12, 14).

5. Transmission selon une ou plusieurs des revendications précédentes, caractérisée en ce que des canalisations d'alimentation (102, 104, 106) disposées dans le carter (16) de la transmission, sont portées dans des logements (108, 110, 112) solidaires du carter, et sont raccordées, au moyen de douilles d'étanchéité (114), au dispositif de commande hydraulique (20).

6. Transmission selon la revendication 5, caractérisée en ce que les canalisations d'alimentation (102, 106,) font saillie hors des logements (108, 110, 112), et que les douilles d'étanchéité (114) sont emmanchées sur les canalisations d'alimentation.

7. Transmission selon les revendications 5 et 6, caractérisée en ce que les douilles d'étanchéité (114) possèdent des lèvres d'étanchéité dirigées radialement et axialement et que l'étanchéité axiale est établie entre la surface de raccordement du dispositif de commande hydraulique (20) et les logements (108, 110, 112) solidaires du carter, et que l'étanchéité radiale est établie entre une douille de serrage (113) des douilles d'étanchéité (114) et les canalisations d'alimentation (102, 104, 106).

8. Transmission selon une ou plusieurs des revendications précédentes, caractérisée en ce qu'une tubulure d'aspiration (124) reliée à un filtre à huile (132) est fixée au côté de la bride (18) de la transmission, situé à l'opposé du dispositif de commande hydraulique (20), et est reliée par une tubulure de raccordement (126), coudée à 90°, à la pompe hydraulique (22) d'une manière étanche à travers la bride (18) de la transmission.

9. Transmission selon une ou plusieurs des revendications précédentes, caractérisée en ce que la transmission est une transmission réalisant une transmission progressive et comportant une poulie conique d'entraînement et une poulie conique entraînée et des moyens d'enroulement, dans laquelle le filtre à huile (132), disposé approximativement au-dessous des poulies coniques de la transmission (10), comporte une paroi de séparation longitudinale (134), qui provoque des niveaux d'huile qui sont différents lorsqu'on regarde une coupe transversale dans le carter (16) de la transmission.
